# DEMANDE DE BREVET EUROPEEN

(11) **EP 0 627 618 A1**
(43) Date de publication de la demande: **07.12.1994**
(21) Numéro de dépôt: 94401132.9
(22) Date de dépôt: 20.05.1994
(51) Int. Cl.: G01N 17/02

(54) **Méthode et dispositif pour contrôler les effets sur des parois d'une solution liquide**

(30) Priorité: 26.05.1993 FR 9306396
(71) Demandeur: INSTITUT FRANCAIS DU PETROLE, F-92502 Rueil-Malmaison (FR)
(72) Inventeur: Roque, Claude, F-78400 Chatou (FR); Girou, André, F-81500 Lavaur (FR); Ouerk, Ourabah Mohamed, F-31400 Toulouse (FR)

(57) **Abrégé**

- La présente invention concerne une méthode et un dispositif pour contrôler, par exemple l'évolution au cours du temps de l'action d'une solution liquide conductrice de l'électricité sur les parois d'une installation dans laquelle elle circule, à l'aide d'un dispositif comportant une électrode de référence (7), une anode (9) et une cathode (8), on mesure la valeur du potentiel d'abandon (E) de la cathode, on applique un signal électrique variable entre la cathode (8) et l'anode (9), on forme ensuite un couple de valeurs relatives sans dimension pour les valeurs du potentiel d'abandon et du courant, et on détermine l'action de la solution par une analyse de l'évolution du couple valeurs relatives sans dimension.
- Application à l'analyse de l'évolution d'un mélange comprenant une eau de gisement et un fluide pour la récupération assistée d'un effluent pétrolier.

## Description

Méthode et dispositif permettant de mesurer la tendance d'un mélange ou d'un fluide à devenir corrosif ou déposant et éventuellement de la corriger.

La présente invention concerne une méthode et un dispositif permettant de déterminer la tendance ou capacité d'une solution liquide conductrice de l'électricité à provoquer des dépôts et/ou à corroder une paroi d'une installation au contact de laquelle elle se trouve.

La méthode s'applique, notamment, lorsque la solution liquide résulte du mélange de deux fluides incompatibles, susceptibles de réagir entre eux, et d'entraîner des détériorations de l'installation dans laquelle ils circulent.

La méthode s'applique, par exemple, dans le cadre de la production pétrolière ou géothermale pour suivre l'évolution d'une eau produite d'un gisement pétrolier ou eau de gisement.

Elle s'applique aussi bien pour des installations industrielles ou domestiques.

Dans le cadre de la production pétrolière, l'eau de gisement est souvent associée à une eau d'injection servant à la récupération assistée d'un effluent pétrolier. La connaissance à tout instant de l'action de l'eau de gisement ou du mélange des eaux de gisement et d'injection sur l'installation dans laquelle il circule, permet de déclencher l'addition de produits correctifs inhibiteurs de corrosion et/ou inhibiteurs de dépôt destinés à éviter la détérioration de cette installation.

Dans le cadre de la production pétrolière, l'eau de gisement est souvent associée à une eau d'injection servant à la récupération assistée d'un effluent pétrolier. L'eau de gisement ou du mélange des eaux de gisement et d'injection peuvent agir sur l'installation dans laquelle elle circule en provoquant des dépôts au niveau de cette installation ou des phénomènes de corrosion.

De nombreuses méthodes ont déjà été décrites, qui permettent de déterminer la tendance qu'a un fluide à provoquer des dépôts sur une paroi.

La thèse du Conservatoire des Arts et Métier publiée par J.C Templier en 1986 ayant pour titre "Comparaison de l'efficacité de produits inhibiteurs de l'entartrage par une méthode électrochimique", décrit un dispositif comprenant une cathode, une anode et une électrode mises au contact d'une solution à étudier. Un tel dispositif permet de connaître le comportement de la solution liquide en observant les variations du potentiel d'abandon de la cathode par rapport à l'électrode de référence et de l'intensité de courant qui circule ente la cathode et l'anode pour une valeur de potentiel imposé entre la cathode et l'électrode de référence. On rappelle que le potentiel d'abandon représente le potentiel pris par la cathode par rapport à une électrode de référence lorsque le courant passant entre l'anode et la cathode est sensiblement égal à zéro.

Le dispositif décrit dans le brevet FR-2.627.586 permet, par exemple, de mesurer en continu la vitesse de corrosion d'installations par un fluide, plus particulièrement pour une application géothermale.

Aucun de ces dispositifs et méthodes, malgré les avantages qu'ils offrent, ne décrivent une méthode systématique permettant de connaître à tout instant l'action de l'eau de gisement ou du mélange des eaux de gisement et d'injection sur l'installation dans laquelle il circule, et de déclencher l'addition de produits correctifs inhibiteurs de corrosion et/ou inhibiteurs de dépôts destinés à éviter la détérioration de cette installation.

Dans la plupart des cas, l'apparition des dépôts et d'un effet de corrosion n'est souvent repérée que lorsque le débit du mélange ou le fonctionnement des systèmes de régulation s'en trouve affecté, conduisant à une intervention tardive pour lutter contre ces phénomènes.

La présente invention remédie aux inconvénients précédemment cités en offrant une méthode permettant de connaître l'évolution au cours du temps de l'action d'une solution liquide conductrice de l'électricité sur une paroi de l'installation mise en contact avec la solution.

Un des avantages offert par la présente invention est de pouvoir agir avant une détérioration importante de l'installation et donc d'éviter la diminution de la rentabilité de la production des gisements pétroliers et de la durée de vie des équipements pétroliers, conduisant à une augmentation des coûts de maintenance.

On définit, dans toute la suite du texte, le terme "action" comme la faculté ou capacité qu'a une solution à provoquer des dépôts et/ou à corroder une installation. Ainsi par action déposante, on sous entend la capacité que possède une solution à provoquer des dépôts au niveau des parois de l'installation.

On définit, de même, dans toute la suite du texte, un système électrochimique comme étant un système composé de plusieurs électrodes et d'un fluide, tel qu'une solution liquide conductrice de l'électricité, en contact avec les électrodes.

La méthode selon l'invention permet de contrôler l'évolution au cours du temps de l'action d'une solution liquide conductrice de l'électricité sur les parois d'une installation dans laquelle elle circule, en utilisant un dispositif comportant au moins une électrode de référence, une anode et une cathode, le dispositif étant au contact de la solution. Elle est caractérisée en ce qu'elle comporte au moins un cycle de mesures défini par les étapes suivantes:
- on mesure la valeur du potentiel d'abandon E de ladite cathode par rapport à l'électrode de référence pour une valeur de courant circulant entre la cathode et l'anode sensiblement égale à zéro,
- on applique un signal électrique U variable entre la cathode et l'électrode de référence et on mesure l'intensité de courant I circulant entre la cathode et l'anode,
- on forme un couple de valeurs relatives sans dimension en calculant le rapport des valeurs mesurées du potentiel d'abandon E et du courant I, par rapport à des valeurs de référence définies préalablement, et
- on détermine directement l'action de la solution sur les parois par une analyse de l'évolution du couple de valeurs relatives sans dimension.

On peut comparer le couple de valeurs relatives sans dimension à un ensemble de couples de valeurs définissant un domaine de tolérance. Ainsi on détermine l'évolution de l'action de la solution liquide qui est liée directement aux modifications des valeurs d'un couple dans le temps.

On peut déterminer les valeurs de référence à partir de la solution liquide conductrice de l'électricité en circulation dans l'installation.

Une autre possibilité consiste à déterminer les valeurs de référence à partir d'un fluide de composition connue.

On peut déterminer l'évolution de l'action de la solution liquide en effectuant des comparaisons des couples de valeurs sans dimension représentatifs d'états successifs dans lesquels se trouve la solution liquide conductrice de l'électricité.

Lorsque le couple de valeurs sans dimension représentatif d'un état de la solution liquide se situe en dehors du domaine de tolérance, on peut déclencher une alarme reliée, par exemple, à un dispositif de régulation de l'installation.

On peut aussi ramener la solution liquide dans le domaine de tolérance, par injection d'un produit correctif approprié.

On peut ainsi injecter un produit permettant d'éviter la dégradation de la paroi de l'installation tel qu'un inhibiteur de corrosion et/ou de dépôts.

Selon un mode de réalisation de l'invention on envoie le signal électrique de façon discontinue.

On peut utiliser un signal électrique de forme triangulaire.

La présente invention concerne aussi un dispositif pour contrôler l'évolution au cours du temps de l'action d'une solution conductrice de l'électricité sur les parois d'une installation dans laquelle elle circule, comprenant une enceinte pourvue d'au moins un conduit d'introduction et d'au moins un conduit d'évacuation de la solution liquide, l'enceinte comportant au moins une anode, au moins une cathode et au moins un électrode en contact avec ladite solution. Il est caractérisé en qu'il comporte des moyens permettant d'appliquer un signal électrique variable entre ladite cathode et ladite électrode de référence, des moyens de mesure à la fois du courant I circulant entre ladite anode et ladite cathode et de la valeur du potentiel d'abandon E de la cathode, et des moyens de traitement permettant de déterminer l'action de ladite solution sur les parois de l'installation par une analyse directe de l'évolution du couple des valeurs sans dimension formé à partir des valeurs du courant I et du potentiel d'abandon E formées à partir des données fournies par les moyens de mesure.

Le dispositif peut comprendre une anode pourvue d'au moins un élément adapté à créer une turbulence dans ladite solution liquide, ladite cathode entourant ladite anode étant constituée de plusieurs éléments cathodiques, un élément cathodique ayant une surface interne choisie pour générer une densité j de courant suffisante pour suivre l'action de ladite solution liquide, et en ce que ladite électrode de référence est située entre deux éléments cathodiques.

Le dispositif peut comprendre une anode pourvue d'au moins un élément adapté à créer une turbulence dans ladite solution liquide, la cathode entourant l'anode étant constituée de plusieurs éléments cathodiques, ayant chacun une surface intérieure choisie de façon à générer une densité de courant j suffisante permettant de suivre l'action de ladite solution liquide, I'électrode de référence étant située, de préférence, entre deux éléments cathodiques.

L'anode est constituée, par exemple, de plusieurs tronçons comportant chacun au moins un élément capable de générer une turbulence dans ladite solution.

L'axe de l'enceinte est de préférence vertical.

Les moyens d'application du signal électrique peuvent comporter un système électrique adapté par exemple à appliquer un signal électrique triangulaire.

Le dispositif peut aussi comporter des moyens d'injection de produits destinés à combattre l'action de la solution sur l'installation.

La méthode et le dispositif selon l'invention peuvent être appliqués au contrôle de l'évolution d'une eau de gisement ou d'un mélange formé par une eau de gisement et d'un fluide ayant pour rôle d'aider à la récupération assistée d'un effluent pétrolier.

Ils peuvent aussi servir à la caractérisation de l'évolution d'une eau produite dans des installations géothermales et/ou d'eaux domestiques.

L'originalité essentielle de la méthode et du dispositif selon l'invention est d'obtenir et d'interpréter des données sans dimension, et de s'affranchir ainsi des paramètres provenant des dispositifs de mesure. L'analyse de l'évolution du mélange étudié en est facilitée et la prise de décision concernant la manière de corriger, si nécessaire, cette évolution, est plus aisée. On peut ainsi déterminer plus facilement la manière d'agir sur la composition de la solution liquide conductrice de l'électricité pour la ramener dans un état voisin d'un état de référence.

Un autre avantage offert par la méthode est la possibilité de déclencher une alarme de fonctionnement de l'installation invitant, par exemple, un opérateur à réagir.

L'invention et ses caractéristiques seront mieux comprises à la lecture de la description suivante illustrée par des figures représentant respectivement :
- la figure 1 montre un dispositif de principe permettant de mettre en oeuvre la méthode selon l'invention,
- la figure 2 montre un mode de réalisation préférentiel du dispositif selon l'invention,
- la figure 3 schématise un mode de réalisation de la cathode pour le dispositif de la figure 2,
- les figures 4A et 4B schématisent un mode de réalisation de l'anode pour le dispositif de la figure 2,
- la figure 5 montre une courbe de mesures de valeur du potentiel d'abandon E et du courant I, à partir desquelles, on détermine les valeurs de référence,
- la figure 6 montre des valeurs de points de mesure sans dimension représentatifs de l'évolution d'une solution liquide conductrice,
- la figure 7 montre un diagramme d'interprétation des mesures,
- la figure 8 montre un mode de réalisation du dispositif comportant des moyens d'injection de substances inhibitrices, et
- la figure 9 montre dans un diagramme de coordonnées sans dimension l'évolution au cours du temps d'une solution liquide conductrice corrigée par injection d'une substance inhibitrice.

La méthode selon l'invention est basée sur le contrôle de phénomènes globaux de type électrochimique se produisant dans un système électrochimique comportant plusieurs électrodes et une solution liquide conductrice de l'électricité, ce contrôle permettant de suivre l'évolution au cours du temps de l'action de la solution liquide conductrice sur une paroi d'une installation dans laquelle elle circule et d'agir, éventuellement, en fonction de cette évolution.

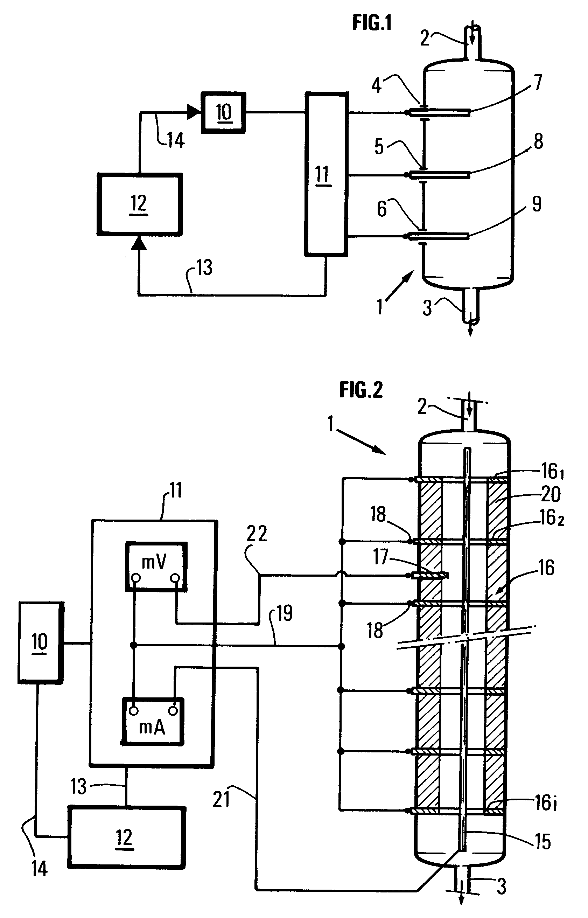

Le dispositif de la figure 1 comporte une enceinte 1 pourvue d'un conduit d'introduction 2 d'un fluide, par exemple une solution liquide conductrice de l'électricité, et d'un conduit d'évacuation 3. Des ouvertures 4, 5, 6 ménagées dans la paroi de l'enceinte 1 permettent de positionner dans celle-ci trois électrodes : une électrode de référence 7, une cathode 8 et une anode 9. Les électrodes sont disposées de manière à se trouver en contact avec la solution liquide conductrice de l'électricité.

Un générateur de signal 10 pilote un dispositif 11, capable de générer une tension électrique et/ou un courant, et d'effectuer des mesures de tension et de courant. Le dispositif 11 est relié aux différentes électrodes du dispositif de manière à établir une différence de potentiel entre l'électrode de référence 7 et la cathode 8 et mesurer le courant I circulant entre l'anode 9 et la cathode 8 ainsi que la valeur du potentiel d'abandon E de la cathode 8. Dans la suite de la description, le dispositif 11 est appelé système électrique.

Un microprocesseur 12 relié au système électrique 11 par une liaison électrique 13 mémorise et traite les données en provenance du système électrique 11. Il envoie aussi des signaux de commande au générateur de signal 10 par une liaison électrique 14.

Le microprocesseur 12 est, par exemple, un micro-ordinateur équipé d'une carte d'acquisition d'un type connu et programmé pour exécuter les étapes de la méthode décrite ci-après et interpréter les données.

Selon un mode de réalisation préféré, schématisé à la figure 2, l'enceinte 1, sensiblement cylindrique, est placée verticalement et l'anode 15 est disposée suivant son axe, une cathode 16 constituée (Fig. 2) d'un certain nombre n d'éléments annulaires 16₁, 16₂, ...,16ᵢ, 16ₙ, dits éléments cathodiques entourant cette anode 15 et l'électrode de référence 17 est située entre deux cathodes. Les éléments cathodiques 16ᵢ et l'électrode de référence 17 sont positionnées dans l'enceinte 1 à travers des ouvertures ménagées dans sa paroi. Les éléments cathodiques 16ᵢ sont isolés les uns des autres par des pièces isolantes 20, l'une au moins de ces pièces comporte un orifice, par exemple, un canal destiné au passage de l'électrode de référence 17. Les éléments 16ᵢ comportent un élément de connexion 18 assurant leur liaison avec le système électrique 11 par l'intermédiaire de liaisons conductrices 19.

Les pièces isolantes 20 et les éléments cathodiques 16ᵢ sont disposés de manière à former un canal annulaire autour de l'anode 15.

L'enceinte 1 est, de préférence constituée d'un matériau susceptible de tenir en pression et en température, choisi en fonction de la nature de la solution liquide conductrice de l'électricité.

L'anode 15 et l'électrode de référence 17 sont reliées au système électrique 11 par des liaisons électriques 21 et 22, ce dernier étant couplé au microprocesseur 12 par la liaison 13.

Le conduit d'introduction 2 de la solution liquide conductrice de l'électricité est, de préférence, situé dans la partie supérieure de l'enceinte de manière à ce que la circulation de la solution liquide dans l'enceinte s'effectue du haut vers le bas, pour éviter l'accumulation de dépôts qui viendraient perturber la mesure, le flux de la solution en circulation entraînant ainsi les dépôts éventuels vers le bas de l'enceinte. Dans ce cas, l'électrode de référence 17 est placée dans la partie supérieure de l'enceinte là où la probabilité de dépôts est la plus faible.

L'électrode de référence 17 est, par exemple, une électrode au calomel saturée, positionnée dans le dispositif de façon à être démontée facilement. On peut aussi envisager d'établir une jonction électrique, telle qu'un pont KCl connu des spécialistes et non représenté sur la figure, permettant de déconnecter l'électrode de référence lorsque l'on n'effectue pas de mesures de façon à conserver son intégralité de fonctionnement, c'est-à-dire, pour éviter une détérioration de l'électrode.

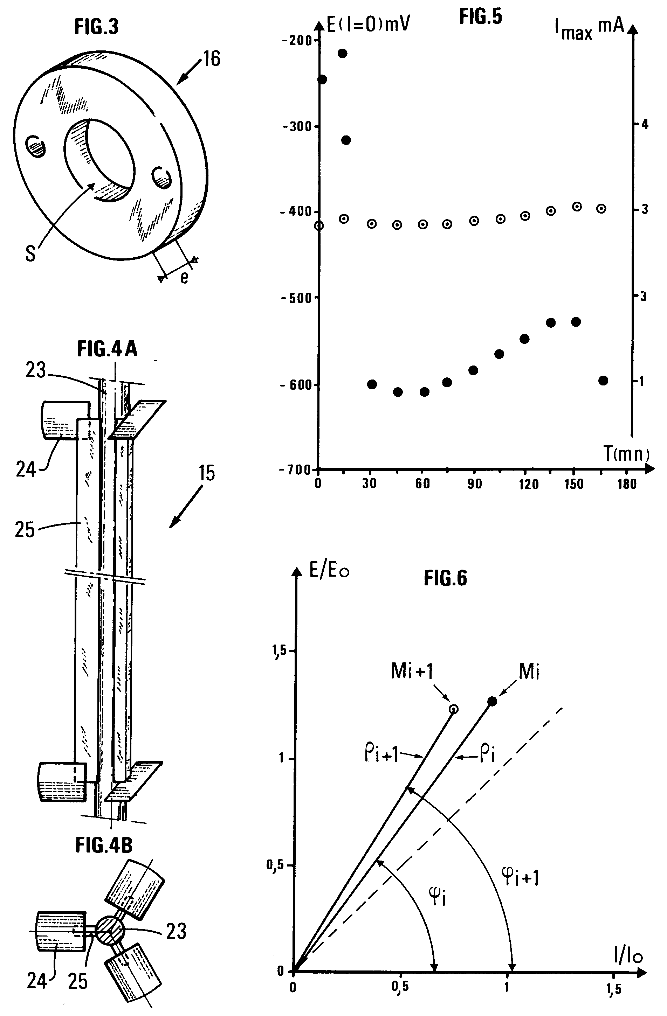

La figure 3 montre un élément cathodique 16ᵢ en forme de couronne ayant une surface intérieure S et une épaisseur e. La surface S est choisie de manière que la densité de courant j qu'elle peut générer, soit suffisante pour analyser la solution en circulation dans l'enceinte. Elle est aussi choisie en fonction de la position de l'élément cathodique dans l'enceinte.

Le nombre n d'éléments cathodiques 16ᵢ est fixé en fonction de la densité de courant j de façon à optimiser l'analyse de la solution liquide conductrice en circulation.

On utilise, par exemple, dix éléments cathodiques 16₁, 16₂, ...,16ᵢ, 16₁₀, répartis tout le long de l'enceinte, dont le nombre est fixé en fonction du front d'avancement des dépôts générés au fur et à mesure de l'évolution de la solution liquide dans le temps, pour qu'un certain nombre d'entre eux ne soient pas recouverts par des dépôts ou l'accumulation de ces dépôts tout au long du processus de mesure.

Les éléments cathodiques 16ᵢ sont réalisés, par exemple, dans un matériau conducteur.

L'anode 15 représentée sur la figure 4a est constituée d'un élément allongé tel qu'une tige 23 pourvue d'ailettes radiales sur au moins une partie de sa longueur, générant une turbulence dans la solution liquide en circulation dans l'enceinte. L'anode 15 comprend, par exemple, plusieurs tronçons (figure 4A) placés bout à bout, chacun comportant plusieurs ailettes 24 solidaires de réglettes 25 disposées suivant des génératrices de l'anode et fixées à elle reliées à l'élément 23. Leur longueur est sensiblement identique à celle d'un tronçon. Les tronçons sont de préférence décalés les uns par rapport aux autres de manière à renforcer les effets de turbulence créés par la présence des ailettes ou pales 24 et de façon ce que la solution liquide ait un mouvement de rotation lorsqu'elle circule dans l'enceinte. Le nombre de ces tronçons ainsi que leur position le long de l'élément allongé 23 est fonction du degré de turbulence que l'on souhaite générer dans la solution liquide.

Les ailettes sont groupées par trois et implantées (Fig. 4B), par exemple, à 120° les unes par rapport aux autres autour de plusieurs tronçons de la tige . Un tronçon comporte, de préférence, deux groupes de trois ailettes positionnées à chacune des extrémités du tronçon.

Les ailettes 24 sont en matériau isolant et servent à centrer l'anode 15 par rapport aux éléments cathodiques 16ᵢ.

L'anode 15 est constituée, de préférence, d'un matériau inaltérable par la solution liquide conductrice, tel que de l'acier inoxydable stabilisé, par exemple, de type Uranus ou hastelloy, du graphite, ou encore du platine.

On a découvert que l'on pouvait caractériser l'évolution d'une solution liquide conductrice de l'électricité ou d'un mélange en combinant un certain nombre de valeurs sans dimension, traduisant des phénomènes d'équilibre, de cinétique et de transfert de matière, et ainsi de quantifier globalement la capacité, ou action, de la solution liquide sur une installation dans laquelle elle circule.

La méthode selon l'invention comporte au moins les deux étapes distinctes suivantes:
- une première étape ou étape d'initialisation au cours de laquelle, on détermine des valeurs de référence pour le potentiel d'abandon Eo de la cathode 16 et pour le courant Io circulant entre l'anode 15 et la cathode 16,
- une deuxième étape où l'on acquiert des données représentatives d'au moins deux états de la solution liquide analysée.

La méthode selon l'invention s'applique particulièrement bien à la surveillance ou au contrôle de l'action d'une solution liquide conductrice de l'électricité, telle qu'une eau produite, et plus particulièrement d'une eau de gisement ou d'un mélange constitué d'une eau de gisement et d'une eau d'injection ou encore un mélange comportant une eau de gisement, une eau d'injection et des produits tels que des inhibiteurs de corrosion ou de dépôts.

L'initialisation du système comprend les opérations suivantes :
1) on fait circuler le mélange à analyser dans l'enceinte 1,
2) le microprocesseur 12 déclenche
   - la mesure à l'aide du système électrique 11, de la valeur du potentiel d'abandon E de la cathode 16 pour une valeur de courant I circulant entre la cathode et l'anode 15 sensiblement égale à zéro, cette valeur étant mesurée par rapport à l'électrode de référence 17, puis
   - la commande du générateur de signal 10, qui établit entre l'électrode de référence 17 et la cathode 16, un signal électrique U, d'amplitude égale à une valeur maximale de potentiel imposé, et
3) la mesure de l'intensité du courant I circulant entre l'anode 15 et la cathode 16, pour la valeur maximale de potentiel imposé, à l'aide du système électrique.

Les couples de valeurs mesurées (E, I) sont mémorisés dans le microprocesseur 12 qui réitère les étapes précédentes un certain nombre de fois et combine les mesures effectuant par exemple une moyenne arithmétique de ces valeurs mesurées pour obtenir les valeurs de référence Io et Eo qui sont ensuite mémorisées dans le microprocesseur 12.

Les points de mesure représentés sur la figure 5 ont été obtenus avec une solution liquide conductrice de l'électricité constituée d'un mélange d'eau de gisement et d'eau aidant à la récupération assistée d'effluents pétroliers. Les compositions simplifiées des eaux de ce mélange sont données dans les tableaux 1 et 2 ci-après. Les valeurs mesurées conduisent à des valeurs de référence de l'ordre de -570mV pour le potentiel d'abandon Eo et à 2,8mA pour le courant Io.

**TABLEAU 1**

| Eau de gisement | |
|---|---|
| NaCl | 100g/l |
| Ba⁺⁺ | 1100mg/l |

**TABLEAU 2**

| Eau d'injection | |
|---|---|
| NaCl | 1,14g/l |
| SO₄⁼ | 1296mg/l |

On réitère ces étapes, jusqu'à obtenir la stabilisation de ces valeurs avant d'en effectuer la moyenne. On effectue, de préférence 10 mesures pour arriver à la stabilisation.

Le microprocesseur 12, pour effectuer sa moyenne, exclut toutes les valeurs trop éloignées de la valeur la plus fréquente comme il est bien connu des spécialistes.

La signal électrique U a, de préférence, une forme triangulaire avec une amplitude maximale égale à -1200mV et un temps de montée et de descente fixés, les caractéristiques de ce signal (forme, amplitude et période) étant contrôlées par le système électrique 11, et éventuellement modifiées par le processeur 12. Ces temps sont choisis de manière à être les plus courts possibles de façon à éviter des artefacts, par exemple, de dégazage dus au signal électrochimique. L'amplitude maximale correspond à une valeur évitant toute réaction possible d'électrode.

La deuxième étape de la méthode consiste à réaliser un premier cycle de mesures représentatif de l'état du mélange à un instant donné, à partir duquel on définit le domaine de tolérance. Ce domaine de tolérance est un domaine de variation acceptable pour les valeurs de I et de E, pour lequel on considère que la solution liquide en circulation dans l'enceinte ne dégrade pas l'installation dans laquelle elle circule.

Le mélange étant en circulation dans l'enceinte 1, le microprocesseur 12 attend un certain temps après l'étape d'initialisation avant de déclencher, à un instant Ti, un cycle d'acquisition de mesures commandé par le microprocesseur 12 qui comporte les étapes suivantes :
1) le système électrique 11 mesure la valeur du potentiel d'abandon E de la cathode 16 pour une valeur de courant I circulant entre la cathode et l'anode sensiblement égale à zéro et par rapport à l'électrode de référence 17,
2) le générateur de signal 10 applique entre l'électrode de référence 17 et la cathode 15, le signal électrique précédemment défini, et
3) le système électrique 11 mesure le courant I circulant entre l'anode 15 et la cathode 16 lorsque le signal électrique U a atteint sa valeur d'amplitude maximale.

On réalise plusieurs cycles successifs comportant les étapes 1, 2, 3, pour obtenir des données fiables et représentatives de l'état dans lequel se trouve le mélange à un instant Ti.

On obtient ainsi un ensemble de valeurs de I et de E, représenté sur la figure 6 par un premier nuage de points. Le microprocesseur 12 acquiert ces valeurs et les divise respectivement par les valeurs de référence Io et Eo obtenues au cours de l'étape d'initialisation, avant d'en effectuer la moyenne. On a ainsi un couple de valeurs Ci sans dimension (Ei/Eo; Ii/Io) caractéristique de l'état (i) du mélange à un instant Ti représenté par le point Mi (Fig.6), mémorisé dans le microprocesseur 12.

Le nuage de points correspondant à un état connu du système peut être représenté par la moyenne barycentrique de tous les points affectés d'un coefficient fixé, représentée par un seul point sur la figure 6.

Le microprocesseur 12 peut également moyenner les valeurs mesurées pour le courant I et la tension d'abandon E avant de les diviser par les valeurs de référence Io et Eo

Le microprocesseur 12 détermine, à partir de ce couple Ci de valeurs sans dimension (Ei/Eo; Ii/Io), le domaine de tolérance précédemment défini.

Le domaine de tolérance est défini par l'ensemble des valeurs relatives sans dimension que peuvent prendre les paramètres E/Eo et I/Io, pour lesquelles on considère que le mélange ne dégrade pas une installation au contact de laquelle il se trouve.

Le domaine de tolérance est, par exemple, délimité par des valeurs seuils ou valeurs limites déterminées à partir du couple Ci obtenu à partir des premières mesures et déterminé précédemment. Ces valeurs limites correspondent alors à un couple (Ei/Eo +/- Δx, Ii/Io +/- Δy).

Les écarts Δx et Δy peuvent être compris de préférence dans une fourchette (3%, 8%).

Les valeurs du domaine de tolérance peuvent aussi avoir été déterminées préalablement au cours d'essais pour lesquels on a relevé, pour un mélange donné, au moins un couple de valeurs sans dimension (E/Eo, I/Io) caractérisant au moins un état du mélange, ces états étant considérés comme non dégradant l'installation dans laquelle le mélange circule.

Puis, il attend un certain temps, en moyenne une heure, avant de déclencher un nouveau cycle de mesures caractérisant le mélange dans un second état à un instant Ti+1. Il calcule alors, de manière identique à l'état (i), le couple de valeurs sans dimension (Ei+1/Eo; Ii+1/Io) qui correspond sur la figure 6 au point Mi + 1.

La figure 6 représente des points de mesure obtenus pour le mélange de composition connue, définie par les tableaux 1 et 2, correspondant à l'évolution de la solution liquide entre l'état (i) et l'état (i+1). Chaque cycle de mesures comprend 10 mesures de tension d'abandon et 10 mesures de courant.

L'interprétation de l'évolution du mélange de l'état (i) à l'état (i+1) se fait, à partir d'un modèle mémorisé dans le microprocesseur 12, prenant en compte la variation des barycentres des couples de valeurs correspondant aux états (i) et (i+1).

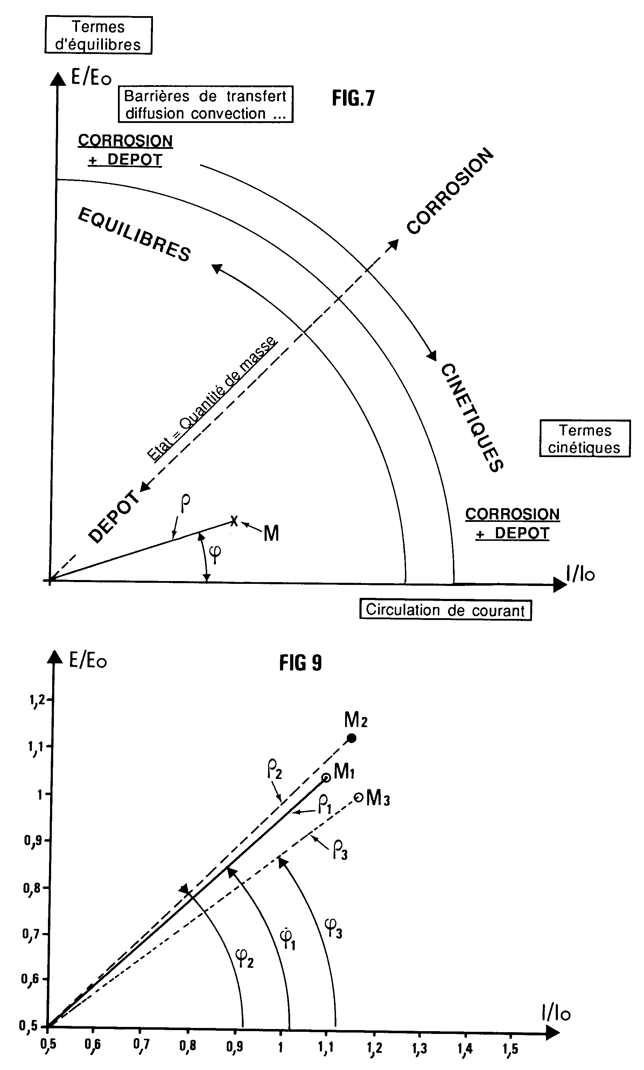

Ce modèle associe aux couples de valeurs sans dimension (Ei/Eo; Ii/Io) correspondant à un point M des coordonnées polaires, ρ ou module, et φ ou argument pris à partir de l'axe I/Io, les points étant représentés dans le système d'axes E/Eo=f(I/Io) comme le montre la figure 7.

Dans le cas de la figure 6, le microprocesseur 12 analyse l'évolution du mélange correspondant au passage du point Mi au point Mi+1, et vérifie par comparaison des valeurs ρᵢ et ρᵢ₊₁ d'une part, et, φᵢ et φᵢ₊₁ d'autre part, que le point Mi+1 reste dans le domaine de tolérance précédemment défini.

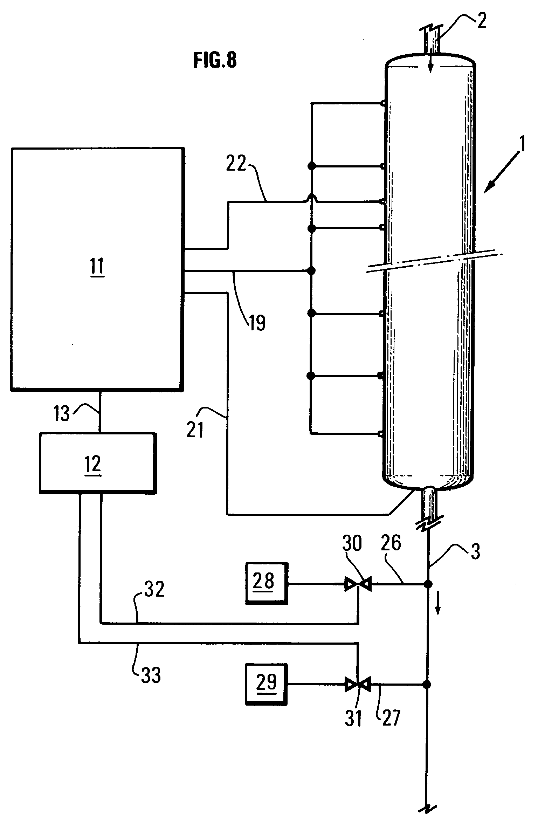

Lorsque le couple de valeurs correspondant au dernier état mesuré du mélange, sort du domaine de tolérance, le microprocesseur 12 réagit soit en déclenchant une alarme permettant à un opérateur de commander, par exemple, un processus de correction, soit en pilotant directement ce processus de correction au moyen d'un dispositif tel que celui de la figure 8 décrit ci-après.

Ce dispositif comporte en plus du dispositif de la figure 2, un ensemble de régulation comportant deux conduits d'injection 26, 27 de produits tels que des substances inhibitrices reliés respectivement à deux réservoirs 28, 29 contenant, par exemple, un inhibiteur de corrosion et un inhibiteur de dépôts. Les conduits d'injection 26, 27 sont équipés de vannes 30, 31 commandées par le microprocesseur via des liaisons 32, 33, ces vannes permettant de régler le débit des inhibiteurs injectés.

Quand le microprocesseur 12 établit que le dernier couple de valeurs mesurées sort du domaine de tolérance, il envoie des signaux de commande à l'ensemble de régulation par l'intermédiaire des liaisons électriques 32, 33 de manière à ramener la solution liquide dans un état faisant partie du domaine de tolérance par injection d'au moins une des deux substances inhibitrices. Ainsi, on asservit, par exemple, la nature et la quantité de produit à injecter en fonction des signaux délivrés par le microprocesseur 12.

Sur le diagramme de la figure 9 le point M1(ρ₁, φ₁,) est représentatif de l'état du mélange précédent à un instant déterminé et le point M2(ρ₂, φ₂) une heure après.

L'acquisition et le calcul des couples de valeurs sans dimension conduisant à ces deux points M1, M2 ont été effectués en suivant les étapes précédemment définies en relation avec la figure 6. Le microprocesseur 12 analyse les valeurs du module ρ2 et de l'argument φ₂ relatives au point M2 et estime que l'écart entre les deux points correspond à une augmentation du pouvoir corrosif du mélange et qu'il est suffisant pour le faire sortir hors du domaine de tolérance. Il envoie alors un signal de commande à la vanne 30 de manière à injecter l'inhibiteur de corrosion dans l'installation. La quantité d'inhibiteur injectée est calculée en fonction de l'écart existant entre la position du point M2 et la position la plus proche appartenant au domaine de tolérance caractérisant un état, dit état limite, et l'injection se poursuit jusqu'à ce que le point M2 soit au moins ramené dans cet état limite. Pour cela le microprocesseur 12 après avoir injecté une quantité d'inhibiteur de corrosion attend un certain temps permettant à l'inhibiteur de jouer son rôle puis déclenche un cycle de mesures identique au précédent de manière à obtenir un couple de valeurs (E/Eo, I/Io) représentatif de l'état du mélange comportant l'inhibiteur de corrosion. Dans le cas où ce nouveau couple de valeurs appartient au domaine de tolérance, le microprocesseur envoie un signal commandant la fermeture de la vanne d'injection 30.

Si le nouveau couple de valeurs est situé hors du domaine de tolérance, le microprocesseur analyse le nouvel écart et en fonction de cet écart détermine le type d'inhibiteur et la quantité de cet inhibiteur nécessaire pour ramener le mélange vers un état permis, c'est-à-dire un état appartenant au domaine de tolérance.

On constate ainsi sur la figure 9 qu'une injection d'un inhibiteur de corrosion a permis de ramener le point M2 en un point M3.

Lorsque le mélange évolue vers un état pour lequel le phénomène de dépôt est prédominant par rapport au phénomène de corrosion, le microprocesseur commande l'injection d'un inhibiteur de dépôts de manière à combattre ce phénomène.

Il est aussi possible d'injecter simultanément les deux types d'inhibiteurs, les uns étant destinés à combattre les phénomènes de corrosion, les autres les phénomènes de dépôts, les quantités de ces inhibiteurs étant déterminées en fonction des écarts des modules et/ou des arguments.

L'état dans lequel se trouve le mélange après injection de l'inhibiteur et appartenant au domaine de tolérance est, dans certains cas, pris comme nouvel état de référence.

Le domaine de tolérance varie, par exemple, en fonction de la position du couple de valeurs sans dimension dans le diagramme d'interprétation de la figure 7.

Les produits destinés à combattre la corrosion ou la formation de dépôts sont bien connus de l'homme de l'art et choisis en fonction de la composition de la solution liquide conductrice.

On ne sortira pas du cadre de l'invention en isolant thermostatiquement l'enceinte 1.

L'enceinte 1 et les trois électrodes (15-17) peuvent être de forme quelconque, avec de préférence une disposition cathode-anode favorisant des répartitions non uniformes de la densité du courant au niveau des électrodes.

Bien entendu, diverses modifications et/ou adjonctions peuvent être apportées par l'homme du métier à la méthode dont la description vient d'être donnée à titre nullement limitatif, sans sortir du cadre de l'invention.

## Revendications

**1. -** Méthode pour contrôler l'évolution au cours du temps de l'action d'une solution liquide conductrice de l'électricité sur les parois d'une installation dans laquelle elle circule, en utilisant un dispositif comportant au moins une électrode de référence (7), une anode (9) et une cathode (8), le dispositif étant au contact de ladite solution liquide, caractérisée en ce qu'elle comporte au moins un cycle de mesures défini par les étapes suivantes:
- on mesure la valeur du potentiel d'abandon (E) de ladite cathode, par rapport à l'électrode de référence, pour une valeur de courant circulant entre la cathode (8) et l'anode (9) sensiblement égale à zéro,
- on applique un signal électrique (U) variable entre la cathode (8) et l'électrode de référence (7) et on mesure l'intensité de courant (I) circulant entre la cathode (8) et l'anode (9),
- on forme un couple de valeurs relatives sans dimension en calculant le rapport des valeurs mesurées du potentiel d'abandon (E) et du courant (I) par rapport à des valeurs de référence définies préalablement, et
- on détermine directement l'action de la solution sur les parois de l'installation par une analyse de l'évolution du couple de valeurs relatives sans dimension.

**2. -** Méthode selon la revendication 1, caractérisée en ce que l'on détermine l'action de la solution en comparant ledit couple de valeurs, à un ensemble de couples de valeurs définissant un domaine de tolérance.

**3. -** Méthode selon la revendication 1, caractérisée en ce que l'on détermine lesdites valeurs de référence à partir de ladite solution liquide conductrice de l'électricité en circulation dans l'installation.

**4. -** Méthode selon la revendication 1, caractérisée en ce que l'on détermine lesdites valeurs de référence à partir d'un fluide de composition connue.

**5. -** Méthode selon la revendication 1, caractérisée en ce que l'on détermine l'évolution de l'action de la solution liquide en effectuant des comparaisons des couples de valeurs sans dimension représentatifs d'états successifs dans lesquels se trouve ladite solution liquide conductrice de l'électricité.

**6. -** Méthode selon la revendication 1, caractérisée en ce que lorsque le couple de valeurs sans dimension, représentatif d'un état de la solution liquide, est situé en dehors du domaine de tolérance, on déclenche une alarme.

**7. -** Méthode selon la revendication 1, caractérisée en ce que, lorsque le couple de valeurs sans dimension est situé hors du domaine de tolérance, on ramène ladite solution liquide conductrice de l'électricité dans ledit domaine de tolérance par injection d'un produit correctif approprié.

**8. -** Méthode selon la revendication 7, caractérisée en ce que l'on injecte un produit permettant d'éviter la dégradation de la paroi de l'installation, tel qu'un inhibiteur de corrosion et/ou de dépôts.

**9 -** Méthode selon la revendication 1, caractérisée en ce que l'on envoie le signal électrique (U) de façon discontinue.

**10. -** Méthode selon la revendication 1 ou 7, caractérisée en ce que l'on envoie un signal électrique (U) de forme triangulaire.

**11. -** Dispositif pour contrôler l'évolution au cours de l'action d'une solution liquide conductrice de l'électricité sur les parois d'une installation dans laquelle elle circule comprenant une enceinte (1) pourvue d'au moins un conduit d'introduction (2) et d'au moins un conduit d'évacuation (3) de ladite solution liquide, ladite enceinte comportant au moins une anode (15), au moins une cathode (16) et au moins une électrode (17) en contact avec ladite solution, caractérisé en qu'il comporte des moyens (11) permettant d'appliquer un signal électrique variable entre ladite cathode (16) et ladite électrode de référence (17) et des moyens de mesure à la fois du courant (I) circulant entre ladite anode (15) et la cathode (16) et de la valeur du potentiel d'abandon (E) de la cathode (16), et des moyens de traitement (12) permettant de déterminer l'action de ladite solution liquide sur les parois de l'installation par une analyse directe de l'évolution du couple de valeurs sans dimension du courant I et du potentiel d'abandon E formées à partir des données fournies par les moyens de mesure.

**12. -** Dispositif selon la revendication 11, caractérisé en ce que ladite anode (15) comporte au moins un élément (24) adapté à créer une turbulence dans ladite solution liquide, ladite cathode (16) entourant ladite anode (15) étant constituée de plusieurs éléments cathodiques (16₁-16ₙ), ayant chacun une surface intérieure choisie de façon à générer une densité j de courant suffisante pour suivre l'action de ladite solution liquide, et en ce que ladite électrode de référence (17) est située entre deux éléments cathodiques.

**13. -** Dispositif selon la revendication 11, caractérisé en ce que ladite anode (15) est constituée de plusieurs tronçons comportant chacun au moins un élément (24) permettant de créer une turbulence dans ladite solution liquide.

**14. -** Dispositif selon la revendication 11, caractérisé en ce que l'axe de l'enceinte (1) est vertical.

**15. -** Dispositif selon la revendication 11, caractérisé en ce que les moyens d'application du signal électrique comportent un système électrique.

**16. -** Dispositif selon la revendication 15, caractérisé en ce que le système électrique est adapté à appliquer un signal électrique triangulaire.

**17. -** Dispositif selon la revendication 11, caractérisé en ce qu'il comporte des moyens (26 - 31) d'injection de produits destinés à combattre l'action de ladite solution sur l'installation.

**18 -** Application de la méthode selon l'une des revendications précédentes à la caractérisation de l'évolution d'une eau de gisement.

**19. -** Application de la méthode selon l'une des revendications précédentes à la caractérisation de l'évolution d'un mélange comportant une eau de gisement et d'un fluide pour la récupération assistée d'un effluent pétrolier.

**20. -** Application de la méthode selon l'une des revendications précédentes à la caractérisation de l'évolution d'une eau produite dans des installations géothermales et/ou d'eaux domestiques.
